# EUROPÄISCHE PATENTSCHRIFT

(11) **EP 3 670 182 B1**
(45) Veröffentlichungstag und Bekanntmachung des Hinweises auf die Patenterteilung: **13.04.2022**
(21) Anmeldenummer: 19210019.6
(22) Anmeldetag: 19.11.2019
(51) Int. Cl.: B32B 27/08, A47B 96/20, B32B 3/08, B32B 7/12, B32B 21/04, B32B 21/06, B32B 21/08, B32B 21/14, B32B 27/10, B32B 27/16, B32B 27/18, B32B 29/00, E04C 2/00

(54) **BAUELEMENT, INSBESONDERE PLATTENELEMENT**
COMPONENT, ESPECIALLY A PLATE ELEMENT
COMPOSANT, EN PARTICULIER ÉLÉMENT FORMANT PLAQUE

(30) Priorität: 19.12.2018 DE 202018107256 U
(43) Veröffentlichungstag der Anmeldung: 24.06.2020
(73) Patentinhaber: REHAU Industries SE & Co. KG, 95111 Rehau (DE)
(72) Erfinder: Kraus, Alexander, 95707 Thiersheim (DE)

(56) Entgegenhaltungen:
- EP-A1- 2 654 510
- DE-A1-102013 214 391
- DE-U1-202016 103 409

## Beschreibung

Die Erfindung betrifft ein Bauelement, insbesondere Plattenelement, umfassend wenigstens ein Trägerelement mit wenigstens einer Decklage, wenigstens einem Profilelement, umfassend wenigstens eine Strukturschicht sowie wenigstens eine Funktionsschicht, wobei das Profilelement an wenigstens einer Schmalseite des Trägerelementes fixiert ist, wobei die Strukturschicht wenigstens teilweise einen polymeren Werkstoff aufweist, gemäß dem Oberbegriff des Anspruches 1.

Es ist aus dem Stand der Technik bekannt, dass zum Schutz insbesondere der Stirnflächen derartiger Bauelement, insbesondere Plattenelement, Profilelemente aufgebracht bzw. fixiert werden. Dabei werden an sich bekannte Schmelzklebstoffen eingesetzt, die jedoch dazu führen, dass eine sichtbare Fuge zwischen den Profilelementen und dem Bauelement, insbesondere Plattenelement, entsteht, die optisch nicht ansprechend aussieht.

Weiterhin ist es aus dem Stand der Technik bekannt, dass bei Bauelementen, insbesondere Plattenelementen, beim Einsatz in Gebäuden bzw. in Fahrzeugen, das Justieren sowie Fixieren der Profilelemente an den jeweiligen Schmalseiten und den insbesondere die Fixierung zu bzw. an den äußerst anspruchsvoll und aufwendig ist. Dies resultiert unter anderem daraus, dass die Werkstoffe der Trägerelemente und auch der Decklagen sehr unterschiedlich, was das Anbringen und Fixieren der Profilelemente noch zusätzlich erschwert.

Weiterhin schwierig bei dem Bauelement, insbesondere Plattenelement, aus dem bekannten Stand der Technik ist, dass beim Einsatz in Gebäuden bzw. Fahrzeugen hohe Anforderungen an die Temperaturbeständigkeit, die Haftfestigkeit sowie die Optik der Trennfuge zwischen Bauelement und die bisher eingesetzten Profilelemente mit den bekannten Schmelzklebstoffen nicht zu einer optimalen Fixierung führen und auch die erforderliche Wärmeformbeständigkeit nicht erreichbar ist.

Aus der EP 1 163 864 ist ein Bauelement, insbesondere eine Möbelplatte und ein Verfahren zu deren Herstellung bekannt. Es wird eine beschrieben, wie ein Profilelement über seine Funktionsschicht mit Holzwerkstoffen durch das Einbringen von Wärme beispielsweise durch den Einsatz der Lasertechnik fixiert werden kann. Zur Fixierung dieses Profilelementes an Bauelementen ist es bei verschiedenen Werkstoffen schwierig, einen sicheren Halt insbesondere des polymeren Profilelementes zu realisieren.

Die DE 20 2016 103409 U1 offenbart eine Kantenleiste für Möbelstücke, umfassend eine Schmelzschicht, sowie eine mit der Schmelzschicht verbundene Strukturschicht, die beide wenigstens teilweise einen polymeren Werkstoff aufweisen, dass der Werkstoff der Schmelzschicht ausgewählt ist aus der Gruppe der Polyamide (PA), vorzugsweise eines aliphatischen und / oder teilaromatischen und / oder aromatischen Polyamids, wobei der Werkstoff der Schmelzschicht ein Copolyamid ist, welches ausgehend von Polyamidbildnern, ausgewählt aus der Gruppe, umfassend Caprolactam, Laurinlactam, Aminoundecansäure, Hexamethylendiamin, Adipinsäure, Azelainsäure, Dodecandisäure, Piperazin und dergleichen, hergestellt ist und einen Schmelzflussindex (MFI) von wenigstens 10 g / 10 min., bevorzugt 15 g bis 100 g/ 10 min., besonders bevorzugt 15 g bis 50 g/ 10 min. gemäß DIN ISO 1133 bei 160 °C / 1,20 kg aufweist. Dabei können dem polymeren Werkstoff der Strukturschicht geeignete Füll- und/oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen die Füll- und/oder Verstärkungsstoffe sind dabei in Mengen von etwa 5 bis 50 Gew.-%, vorzugsweise 10 bis 35 Gew.-%, bezogen auf die Gesamtmasse, enthalten.

Weiterhin kann die Decklage beispielsweise als CPL-Schichtstoff, HPL-Schichtstoff sowie melamingetränkte Papierwerkstoffe ausgebildet sein.

Der Erfindung liegt die Aufgabe zugrunde, ein Bauelement, insbesondere Plattenelement bereitzustellen, das wirtschaftlich und kostengünstig herstellbar ist, dass den erhöhten Anforderungen insbesondere beim Einsatz in Gebäuden sowie Fahrzeugen entspricht, an wenigstens einer Schmalseite wenigstens ein Profilelement mit einer optisch nicht sichtbaren Trennfuge fixiert ist.

Um diese Aufgabe zu lösen, stellt die Erfindung ein Bauelement, insbesondere Plattenelement, mit den Merkmalen gemäß Anspruch 1 bereit.

Es hat sich überraschend herausgestellt, dass ein Bauelement, insbesondere Plattenelement, umfassend wenigstens ein Trägerelement mit wenigstens einer Decklage, wenigstens einem Profilelement, umfassend wenigstens eine Strukturschicht sowie wenigstens eine Funktionsschicht, wobei das Profilelement an wenigstens einer Schmalseite des Trägerelementes fixiert ist, wobei die Strukturschicht wenigstens teilweise einen polymeren Werkstoff aufweist, wobei wenigstens eine Decklage und das Profilelement wenigstens teilweise eine Komponente, ausgewählt aus einem halogenierten und/oder einem stickstoffbasierten und/oder einem organophosphorbasierten und/oder einem anorganischen Flammschutzmittel in einer Menge von 0,1 bis 30 Gewichts-%, vorzugsweise 0,2 bis 25 Gewichts-%, bezogen auf ihr Gesamtgewicht aufweist, sich dadurch auszeichnet, dass der Werkstoff des Profilelements ein Brandverhalten nach UL-Norm 94 von wenigstens V1 bei einer Dicke von 1,0 mm aufweist, dass der Werkstoff des Profilelements einen Flammindex von 960 °C bei einer Dicke von 3 mm gemäß IEC60695-2-12 aufweist. Die Erfindung hat erkannt, dass das erfindungsgemäßes Bauelement, insbesondere Plattenelement, erst dann wirtschaftlich und kostengünstig herstellbar ist, wenn der Werkstoff des Profilelements mit wenigstens einer derartigen Komponente, zum Einsatz kommt, welcher eine derart optimales Brandverhalten aufweist. Nach umfangreichen Versuchen mit verschiedensten Werkstoffen für das Profilelement hatte sich überraschenderweise herausgestellt, dass nahezu ausschließlich mit derartigen Komponenten es erstmals möglich ist, die Schmalseiten eines erfindungsgemäßen Bauelements, insbesondere Plattenelement, optisch ohne Trennfuge wirtschaftlich und kostengünstig zu verschließen, ohne dass die Wasserbeständigkeit des erfindungsgemäßen Bauelementes beeinträchtigt ist. Als halogenierte Komponenten haben sich bewährt, PentaBDE, OctaBDE, DecaBDE, DBDPE, BTBPE, TBBPA und HBCDD. Stickstoffbasierte Komponenten sind beispielsweise Melamin und Harnstoff. Organophosphorbasierte Komponenten sind typischerweise aromatische und aliphatische Ester der Phosphorsäure, wie beispielsweise: TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)), BDP (Bisphenol-A-bis(diphenylphosphat)), Vinylphosphonsäure.Anorganische Flammschutzmittel sind beispielsweise: Aluminiumhydroxid [Al(OH)₃], Aluminiumsulfat, Borax und Borsäure, Magnesiumhydroxid [Mg(OH)₂, MDH, "Magnesiumdihydrat"], Blähgraphit/ expandierbarer Graphit, Aluminiumsulfat [(NH₄)₂SO₄], Ammoniumphosphat und -polyphosphat [(NH₄)₃PO₄], Antimontrioxid (Sb₂O₃), Antimonpentoxid (Sb₂O₅), Zinkborate.

Weiterhin vorteilhaft bei dem erfindungsgemäßen Bauelement, insbesondere Plattenelement, ist, dass der Werkstoff des Profilelements einen relativen Temperatur Index nach UL-Norm 746B von wenigstens 90 °C aufweist. Durch diese vorteilhafte Ausgestaltung des Werkstoffes des Profilelementes des erfindungsgemäßen Bauelementes verfügt dieser über ausreichend polare Anteile sowie eine hohe Temperaturbeständigkeit, sodass bei Anbringung des Profilelementes an den wenigstens eine Schmalseite der erfindungsgemäßen Bauelemente, insbesondere Plattenelement, eine optimierte Haftfestigkeit bzw. Schälfestigkeit bei gleichzeitig besserer Feuchtebeständigkeit und Hitzebeständigkeit realisierbar ist.

Ebenfalls vorteilhaft bei dem erfindungsgemäßen Bauelement, insbesondere Plattenelement, wird gesehen, dass der Werkstoff des Profilelements einen CTI (Comparative Tracking Index) nach UL-Norm 746A von wenigstens 500 °C, bevorzugt wenigstens 550 °C aufweist.

Ein Vorteil des erfindungsgemäßen Bauelements, insbesondere Plattenelement, ist, dass insbesondere bei der Bestimmung des Brennverhaltens durch den Sauerstoffindex OI gemäß EN ISO 4589 - 2, OI gemäß dem Anforderungssatz R22 für den Werkstoff des Profilelementes ein Sauerstoffgehalt von etwa 28 % ermittelt wurde, was eine Klassifikation nach HL2 ermöglicht. Weiterhin vorteilhaft bei dem erfindungsgemäßen Bauelement, insbesondere Plattenelement ist, dass weiterhin ein Sauerstoffgehalt OI von 32 % ermittelt wurde, was wiederum eine vorteilhafte Klassifizierung nach HL3 ermöglicht.

Ebenso überraschend hat sich herausgestellt bei dem erfindungsgemäßen Bauelement, insbesondere Plattenelement, dass auch bei der Bestimmung des Brennverhaltens durch den Sauerstoffindex gemäß EN ISO 4589-2, OI gemäß dem Anforderungssatz R 24 ein Sauerstoffgehalt von größer 32 % ermittelt worden, sodass auch für diesen Anforderungssatz eine Klassifikation in HL3 erreicht ist.

Hierdurch ist vorteilhafterweise erreichbar, dass ein derart ausgebildetes Profilelement sehr leicht an den Schmalseiten des erfindungsgemäßen Bauelements, insbesondere Plattenelement anbringbar ist, wobei die dafür notwendige Energie zur Aktivierung bzw. zur Überleitung vom festen in einen plastischen bzw. flüssigen Zustand geringer ist als beim bisher bekannten Stand der Technik.

Ein ebenfalls wichtiger Vorteil des erfindungsgemäßen Bauelements, insbesondere Plattenelement besteht darin, dass das Trägerelement aus Holz, Holzwerkstoffen, Holzersatzstoffen, wie bspw. HPL- Platten sowie CPL- Platten und dergleichen ausgebildet ist. Hierdurch sind erfindungsgemäße Bauelemente, insbesondere Plattenelement mit unterschiedlichsten Eigenschaften kostengünstig herstellbar.

Weiterhin vorteilhaft bei dem erfindungsgemäßen Bauelement, insbesondere Plattenelement, ist, dass der Werkstoff des Profilelements eine Kerbschlagzähigkeit von wenigstens 20 kJ/m ² bei 23 °C gemäß ISO 180/1, bevorzugt wenigstens 10 kJ/m ² bei -30 °C gemäß ISO 180/1A aufweist. Damit ist vorteilhafterweise sichergestellt, dass bei bestimmungsgemäßer Verwendung des Bauelementes, insbesondere des Plattenelementes, wie Schädigungen bzw. Auflösungserscheinungen ausgeschlossen sind.

Ebenfalls vorteilhaft bei dem erfindungsgemäßen Bauelement, insbesondere Plattenelement, ist, dass das Profilelement wenigstens eine Schmelzschicht aufweist, die über wenigstens eine Funktionsschicht on der Strukturschicht beabstandet, angeordnet ist. In dieser vorteilhaften Ausgestaltung ist es durch den Werkstoff der Schmelzschicht des Profilelementes möglich ist, chemische Bindungen, insbesondere Nebenvalenzbindungen sowohl zum Werkstoff des Bauelementes, insbesondere Plattenelement, als auch zu den auf den Flächen des erfindungsgemäßen Bauelements, insbesondere Plattenelement , angebrachten Decklagen, beispielsweise aus papierartigen bzw. folienartigen Werkstoffen, zu realisieren, was wiederum eine hohe Haftung zwischen den einzelnen Komponenten im Ergebnis hat.

Ein weiterer Vorteil besteht darin, dass auch eine bessere Adhäsion des Werkstoffes der Schmelzschicht des Profilelementes, insbesondere Plattenelement, zu den Decklagen des erfindungsgemäßen Bauelements beispielsweise aus polymeren Werkstoffen wie bspw. PET realisierbar ist. PET ist dabei Polyethylenterephthalat, welches ein durch Polykondensation hergestellter thermoplastischer Kunststoff aus der Familie der Polyester ist.

Ein weiterer Vorteil des erfindungsgemäßen Bauelements besteht darin, dass durch die Ausbildung insbesondere des Werkstoffes der Funktionsschicht für das hergestellte Bauelement bessere bzw. höhere Werte der für Bauelemente wichtigen Feuchtebeständigkeit erstmals realisierbar sind, da die bisherige Schwachstelle im Stand der Technik, nämlich die Verbindung des Werkstoffes der Schmelzschicht mit der auf dem Bauelement aufgebrachten Decklage, wie bspw. CPL- Schichtstoff, HPL- Schichtstoff sowie melamingetränkte Papierwerkstoffe, optimiert ist, indem zumindest Bestandteile des Werkstoffes der Funktionsschicht mit Teilen der Werkstoffe der Decklagen über chemische Bindungen, insbesondere Nebenvalenzbindungen, sowie Wasserstoffbrückenbindungen realisierbar sind, die einerseits für die hohen Haftfestigkeits- bzw. Schälfestigkeitswerte relevant sind und andererseits auch für die besseren bzw. höheren Werte der für Bauelemente wichtigen Feuchtebeständigkeit. CPL- Schichtstoff ist dabei ein *"Continuous Pressure Laminate",* welche im kontinuierlichen Verfahren aus mehreren Lagen Papier und Harz hergestellt sind. HPL- Schichtstoff ist ein *"High Pressure Laminate", welches* im Hochdruckpress-Verfahren hergestellt ist in Plattenform aus mehreren Lagen Papier und Harz.

Ein weiterer Vorteil besteht darin, dass auch eine bessere Adhäsion des Werkstoffes der Schmelzschicht zu Deckschichten aus polymeren Werkstoffen wie bspw. PET realisierbar ist. PET ist dabei Polyethylenterephthalat, welches ein durch Polykondensation hergestellter thermoplastischer Kunststoff aus der Familie der Polyester ist.

Insbesondere durch die vorteilhaften Eigenschaften des Werkstoffes der Schmelzschicht des Profilelements des erfindungsgemäßen Bauelements, insbesondere Plattenelement, ist dieses optimal mit Energie aus einer Energiequelle ausgewählt aus der Gruppe Laserquelle, Infrarotquelle, Ultraschallquelle, Magnetfeldquelle, Mikrowellenquelle, Plasmaquelle sowie Heißluftquelle und dergleichen beaufschlagt zur Bekantung von Bauelementen, insbesondere Plattenelemente, einsetzbar.

Das erfindungsgemäße Bauelement, insbesondere Plattenelement, zeichnet sich weiterhin dadurch aus, dass der Werkstoff des Profilelements eine Zugfestigkeit von wenigstens 65 MPa nach DIN EN ISO 527, sowie eine Bruchdehnung von wenigstens 50 % nach DIN EN ISO 527 aufweist. Hierdurch können erfindungsgemäße Bauelemente, insbesondere Plattenelemente, zur Verfügung gestellt werden, die den Anforderungen bei ihrer Montage aber insbesondere auch bei ihrer bestimmungsgemäßen Verwendung in beispielsweise Gebäuden bzw. Fahrzeugen optimal die Schmalfläche fixierend verschließen sowie bei unabsichtlichen bzw. auch beabsichtigten Beschädigungen erheblichen Widerstand aufweisen.

In einer weiteren vorteilhaften Ausgestaltung des erfindungsgemäßen Bauelements, insbesondere Plattenelement, hat sich gezeigt, dass die der Funktionsschicht des Profilelements gegenüberliegend angeordnete Seite der Strukturschicht einer Oberflächenbehandlung durch ein Coronaverfahren, Beflammungsverfahren, Plasmaverfahren, Silikatisierungsverfahren, Silanisierungsverfahren und dergleichen unterworfen wurde. Hierdurch kann ein optimierter Verbund der Funktionsschicht mit der Strukturschicht des Profilelements des erfindungsgemäßen Bauelements, insbesondere Plattenelement, für verschiedenste Werkstoffkombinationen insbesondere der Funktionsschicht jederzeit realisiert werden.

In einer ebenfalls vorteilhaften Ausgestaltung des erfindungsgemäßen Bauelements, insbesondere Plattenelement, hat sich gezeigt, dass der Werkstoff der Schmelzschicht und/oder der Werkstoff der Strukturschicht des Profilelements licht- und/oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält. In dieser Ausgestaltung des erfindungsgemäßen Bauelements, insbesondere Plattenelement, ist dieses durch an sich bekannte Laserfügeverfahren optimal durch das gezielte Einbringen der Energie in den Werkstoff des Profilelementes an den Schmalseiten von Bauelementen, insbesondere Türblättern, verschweißbar.

Es hat sich weiterhin vorteilhaft herausgestellt, dass der Werkstoff der Schmelzschicht und/oder der Werkstoff der Strukturschicht des Profilelements wenigstens einen, teilweise anorganische und/oder organische Pigmente enthaltenden, Zusatzstoff in einer Menge von etwa 0,01 bis 5,0 Gew.-%, bevorzugt 0,02 bis 3,0 Gew.-%, bezogen auf die Gesamtmenge, eingelagert enthält. Hierdurch ist es möglich, das Profilelement über die Funktionsschicht mit allen derzeit bekannten strahlungsaktivierbaren Verfahren an den Rahmenelementen von Bauelementen, insbesondere Plattenelement an, kostengünstig und wirtschaftlich anzubringen.

Weiterhin vorteilhaft bei dem erfindungsgemäßen Bauelement, insbesondere Plattenelement, ist, dass der Zusatzstoff der Schmelzschicht und/oder der Strukturschicht des Profilelements ausgewählt ist aus der Gruppe der Metalloxide, der Metallphosphate sowie der Metallsalze organischer Anionen. Durch die Auswahl der Zusatzstoffe kann ein erfindungsgemäßes Bauelement, insbesondere Plattenelement, zur Verfügung gestellt werden, die jeweils optimiert auf die strahlungsaktivierten Anbringungsverfahren aber auch auf die Werkstoffe der Möbelstücke abgestimmt ist.

Weiterhin vorteilhaft bei dem erfindungsgemäßen Bauelement, insbesondere Plattenelement, ist, dass der Zusatzstoff der Schmelzschicht und/oder der Strukturschicht des Profilelements ausgewählt ist aus der Gruppe der Metalloxide, der Metallphosphate sowie der Metallsalze organischer Anionen. Durch die Auswahl der Zusatzstoffe kann ein Bauelement, insbesondere Plattenelement, zur Verfügung gestellt werden, das jeweils optimiert auf die strahlungsaktivierten Anbringungsverfahren aber auch auf die Werkstoffe der Möbelstücke abgestimmt ist.

In einer weiteren vorteilhaften Ausführungsform des erfindungsgemäßen Bauelements, insbesondere Plattenelement, ist, dass der Werkstoff der Schmelzschicht des Profilelements polare Gruppen basierend auf Amiden, Aminen, Carbonsäuren bzw. deren Ester bzw. Salze insbesondere Acrylsäure, Acrylsäureester, Silanen, Titanaten, Alkoholen, Imiden, Ammoniumverbindungen oder Sulfonsäuren bzw. deren Estern oder Salzen, geblockten Isocyanaten oder dgl. aufweist. Durch die verschiedenen Möglichkeiten im Werkstoff der Schmelzschicht polare Gruppen anzuordnen kann ein erfindungsgemäßes Bauelement, insbesondere Plattenelement, zur Verfügung gestellt werden, bei der der Werkstoff der Schmelzschicht sowohl polare sowie auch unpolare Anteile aufweist.

Durch die Variation insbesondere der polaren Gruppen im Werkstoff der Schmelzschicht des Profilelements ist es erstmals möglich, ein erfindungsgemäße Bauelement, insbesondere Plattenelement, zur Verfügung zu stellen, bei der der Werkstoff der Funktionsschicht des Profilelementes so optimiert ausgebildet ist, sodass er bei bestimmungsgemäßer Verwendung wenn das Profilelement stoffschlüssig mit der Schmalseite des erfindungsgemäßen Bauelements, insbesondere Plattenelement, ist, sowohl optimale Festigkeitswerte bzw. Schälfestigkeitswerte als auch gleiche bzw. bessere Wasserbeständigkeitswerte realisierbar sind.

Ein weiterer Vorteil des erfindungsgemäßen Bauelements, insbesondere Plattenelement , besteht darin, dass die Strukturschicht des Profilelements auf Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-StyrolCopolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien, insbesondere PC/ABS, basiert.

Dabei können dem polymeren Werkstoff der Strukturschicht des Profilelements geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Talkum, Teflon und dergleichen. Die Füll- und / oder Verstärkungsstoffe sind dabei in Mengen von etwa 2 bis 50 Gew.-%, vorzugsweise 5 bis 35 Gew.-%, bezogen auf die Gesamtmasse, enthalten. Hierdurch ist es erstmals möglich, insbesondere die orthogonale Geometrie von Falzen des Rahmenelements des erfindungsgemäßen Bauelements, insbesondere Plattenelement, automatisiert über ein Profilelement abdichtend und optisch ansprechend, zu verschließen.

Weiterhin ist das erfindungsgemäße Bauelement, insbesondere Plattenelement vorteilhafterweise so ausgebildet, dass der Werkstoff der Funktionsschicht und/oder der Strukturschicht des Profilelements wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher. Somit kann ein erfindungsgemäßes Bauelement, insbesondere Plattenelement, zur Verfügung gestellt werden, das einerseits wirtschaftlich und kostengünstig herstellbar ist, das aber auch die bisher aus dem Stand der Technik bekannten Haftfestigkeitswerte bzw. Schälfestigkeitswerte sowie die insbesondere für Bauelemente, insbesondere Türblätter, wichtige Wasserbeständigkeit wesentlich verbessert.

Das erfindungsgemäße Bauelement, insbesondere Plattenelement, ist weiterhin so ausgebildet, dass die Schmelzschicht des Profilelements über wenigstens eine Funktionsschicht von der Strukturschicht beabstandet angeordnet ist. Diese Funktionsschicht des Profilelements des erfindungsgemäßen Bauelements, insbesondere Plattenelement, dient dazu, dass ein optimaler Verbund zwischen dem Werkstoff der Funktionsschicht und dem Werkstoff der Strukturschicht für die verschiedensten Werkstoffkombinationen insbesondere des Werkstoffes der Funktionsschicht jederzeit kostengünstig und wirtschaftlich realisierbar ist. Dabei hatte sich als vorteilhaft herausgestellt, wenn die Distanzschicht eine Dicke von ca. 1 bis 15 µm, vorzugsweise 2 bis 10 µm aufweist. Für eine kostengünstige und wirtschaftliche Herstellung sind dabei Auftragsmengen von etwa 1 bis 40 g/m² vorzugsweise 3 bis 15 g/m² aufbringbar.

Es hat sich weiterhin als äußerst vorteilhaft herausgestellt, dass der Werkstoff der Funktionsschicht ausgewählt ist aus der Gruppe der Polyurethane (PUR), der Acrylate, der Chloroprene, der Epoxidharze, der Ethylenvinylacetate (beispielsweise EVA-Dispersionen), der Polyvinylacetate (PVAC-Dispersionen) und dergleichen, sowie Mischungen aus zwei oder mehreren der vorgenannten Stoffe.

Es hat sich weiterhin als vorteilhaft herausgestellt, dass die Funktionsschicht des Profilelements des erfindungsgemäßen Bauelements, insbesondere Plattenelement, eine Dicke von etwa 10 µm bis 350 µm, vorzugsweise 15 µm bis 300 µm, besonders bevorzugt 20 bis 300 µm aufweist. Dies führt vorteilhafterweise neben einer wirtschaftlichen und kostengünstigen Herstellung des Profilelements des erfindungsgemäßen Bauelements, insbesondere Plattenelement, dazu, dass die Funktionsschicht des Profilelements der jeweiligen Geometrie bzw. der Werkstoffe des erfindungsgemäßen Bauelements, insbesondere Plattenelement, optimal anpassbar ist.

Das erfindungsgemäße Bauelement, insbesondere Plattenelement soll nun an diesen nicht einschränkenden Ausführungsbeispielen näher beschrieben werden.

Es zeigen:
- Fig. 1:: perspektivische Darstellung eines erfindungsgemäßen Bauelements, insbesondere Plattenelement,
- Fig. 2:: perspektivische Schnittdarstellung eines erfindungsgemäßen Bauelements, insbesondere Plattenelements, mit einem Profilelement,
- Fig. 3:: perspektivische Darstellung eines Profilelements des erfindungsgemäßen Bauelements, insbesondere Plattenelement.

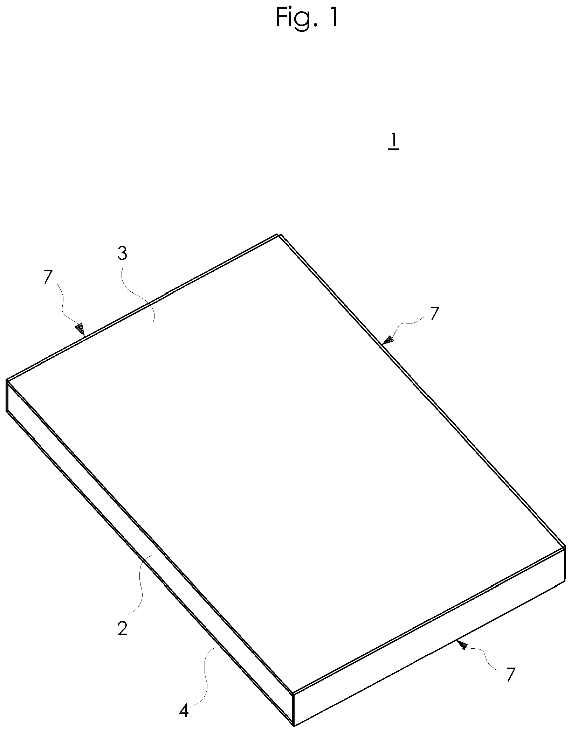

In der Fig. 1 ist eine perspektivische Darstellung eines erfindungsgemäßen Bauelements 1, insbesondere Plattenelement, dargestellt.

Das Bauelement 1, insbesondere Plattenelement, umfasst ein Trägerelement 2, dass an seiner Oberseite eine Decklage 3 und an seiner Unterseite eine Decklage 4 aufweist.

Die Decklage 3,4 ist jeweils vollflächig auf der Oberfläche des Trägerelementes 2 fixiert.

An insgesamt drei Schmalseiten des Bauelementes 1 ist jeweils ein Profilelement 7 angeordnet, welches die jeweilige Schmalseite des Bauelements 1, insbesondere Plattenelement, vollflächig, fixierend umschließt.

Das Profilelement 7 ist in diesem Ausführungsbeispiel so ausgebildet, dass es eine von der Schmalseite des Bauelementes 1 abweisende Strukturschicht 8 aufweist.

Die Strukturschicht 8 weist an ihrer der Schmalseite des Bauelementes 1, insbesondere Plattenelement, eine nicht sichtbare Funktionsschicht 10 auf.

Das Profilelement 7 ist in diesem Ausführungsbeispiel über eine nicht sichtbare Schmelzschicht 9 stoffschlüssig mit der jeweiligen Schmalseite der Bauplatte 1, insbesondere Plattenelement, verbunden.

An der in der Figur linken Schmalseite weist das Bauelement 1, insbesondere Plattenelement kein Profilelement auf, sodass das zwischen den Decklagen 3,4 angeordnete Trägerelement 2 sichtbar ist.

Der Werkstoff des Profilelements 7 des erfindungsgemäßen Bauelements 1, insbesondere Plattenelement, ist in diesem Ausführungsbeispiel Polyvinylchlorid (PVC) und weist eine Komponente ausgewählt aus der Gruppe der organophosphorbasierten Flammschutzmittel in einer Menge von 0,3 Gewichts-Prozent, bezogen auf das Gesamtgewicht, auf. Der Werkstoff des Profilelements 7 des erfindungsgemäßen Bauelements 1, insbesondere Plattenelement, ist weiterhin so ausgebildet, dass er ein Brandverhalten nach UL-Nummer 94 von V1 bei einer Dicke von 1,0 mm aufweist. Weiterhin ist der Werkstoff des Profilelements 7 in diesem Ausführungsbeispiel so ausgebildet, dass er einen Flammindex von 955 °C bei einer Dicke von 3 mm gemäß IEC60695-2-12 aufweist.

Erst durch den Einsatz des speziellen Werkstoffs sowie der unterschiedlichen Komponenten des Profilelements 7 ist eine derartige wirtschaftliche und kostengünstige Fixierung sowie ein Verschluss des Trägerelementes 2 erst möglich. Bei dem erfindungsgemäßen Bauelement 1, insbesondere Plattenelement, ist bei der Bestimmung des Brennverhaltens durch den Sauerstoffindex gemäß EN ISO 4589-2, OI gemäß dem Anforderungssatz R 24 ein Sauerstoffgehalt von größer 32 % ermittelt worden, sodass auch für diesen Anforderungssatz R24 eine Klassifikation in HL3 erreicht ist.

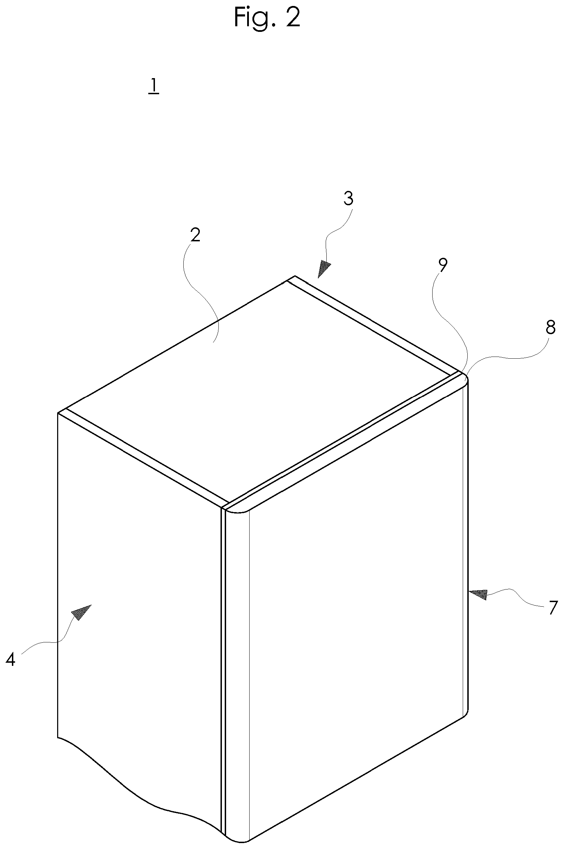

In der Figur 2 ist eine perspektivische Schnittdarstellung eines erfindungsgemäßen Bauelements 1, insbesondere Plattenelement mit einem Profilelement 7 dargestellt.

Der dargestellte Abschnitt des erfindungsgemäßen Bauelements 1, insbesondere Plattenelements, zeigt einen Teil des Trägerelements 2. An den links dargestellten Oberseiten der Trägerelements 2 ist eine Decklage 4 angeordnet, die mit diesem stoffschlüssig verbunden ist. Die Decklage 4, ist als eine, ein Dekor aufweisende, Folie ausgebildet. Auf der der Decklage 4 des Bauelements 1, insbesondere Plattenelement, gegenüberliegenden Seite ist eine weitere Decklage 3 angeordnet.

Das Profilelement 7 ist über die Schmelzschicht 9 stoffschlüssig mit der Schmalseite des Trägerelementes 2 verbunden.

Zwischen der Strukturschicht 8 und der Schmelzschicht 9 des Profilelements 7 des erfindungsgemäßen Bauelements 1, insbesondere Plattenelement, ist in diesem Ausführungsbeispiel eine Funktionsschicht 10 angeordnet, die ausgewählt ist aus der Gruppe der Polyurethane. Der Werkstoff der Strukturschicht 8 des Profilelementes 7 weist in diesem Ausführungsbeispiel eine Zugfestigkeit von etwa 65 MPa nach DIN EN ISO 527 sowie eine Bruchdehnung von etwa 45 % nach DIN EN ISO 527 auf.

Als Strukturschicht 8 des Profilelements 7 des erfindungsgemäßen Bauelements 1, insbesondere Plattenelement, wird eine Schicht bezeichnet, die dem Profilelement 7 im Wesentlichen ihre Struktur, ihre Geometrie sowie auch ihr Design verleiht. Der Werkstoff der Strukturschicht 8 des Profilelementes 7 kann ausgewählt sein aus beliebigen Werkstoffen, beispielsweise aus polymeren Werkstoffen wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder AcrylnitrilButadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyurethan (PUR); Polycarbonat (PC); sowie Mischungen aus wenigstens zwei diesen Materialien, insbesondere PC/ABS, basiert. Dabei können dem polymeren Werkstoff der Strukturschicht 8 des Profilelementes 7 geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten. Der Werkstoff der Schmelzschicht 9 des Profilelements 7 weist in diesem Ausführungsbeispiel einen Schmelztemperaturbereich von etwa 120 °C auf, sodass der erforderliche Energieeintrag um den Werkstoff der Schmelzschicht 9 fügbar zu gestalten, relativ geringgehalten werden kann.

Durch Beaufschlagung insbesondere der Schmelzschicht 9 des Profilelements 7 des erfindungsgemäßen Bauelements 1, insbesondere Plattenelement , mit einer Energie aus einer Energiequelle ausgewählt aus der Gruppe Laserquelle, Infrarotquelle, Ultraschallquelle, Magnetfeldquelle, Mikrowellenquelle, Plasmaquelle sowie Begasungsquelle und dergleichen wird der Werkstoff der Schmelzschicht 9 des Profilelementes 7 die durch die Energiequelle zugeführte Energie aufnehmen und sich auf einen Schmelztemperaturbereich von etwa bis 170 bis 235°C erwärmen.

In diesem Zustand ist es möglich, dass Profilelement 7 über die Schmelzschicht 9 mit der Schmalseite des Trägerelementes 2 des erfindungsgemäßen Bauelements 1, insbesondere Plattenelement, stoffschlüssig in einen adhäsiven Verbund zu bringen.

Es liegt auch im Rahmen der Erfindung, dass der Werkstoff der Schmelzschicht 9 des Profilelements 7 des erfindungsgemäßen Bauelements 1, insbesondere Plattenelement, licht- und / oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält. Im konkreten Ausführungsbeispiel weist der Werkstoff der Funktionsschicht 10 des Profilelements 7 einen anorganische Pigmente enthaltenden Zusatzstoff in einer Menge von etwa 0,3 Gew.-% bezogen auf das Gesamtgewicht auf, wobei dieser Zusatzstoff ausgewählt ist aus der Gruppe der Metallphosphate, insbesondere Kupferhydroxidphosphat.

Durch die vorteilhafte Ausgestaltung des Profilelements 7 des erfindungsgemäßen Bauelements 1, insbesondere Plattenelement, insbesondere des Werkstoffes der Schmelzschicht 9 und/oder der Strukturschicht 8 ist es überraschenderweise erstmals möglich, dass das Profilelement 7 eine Schälfestigkeit von wenigstens 25 N / cm nach DIN 2851, gemessen an Spanplatten, aufweist und sich somit von den bisher bekannten Profilleisten an den Bauelementen, insbesondere Türblättern, aus dem Stand der Technik abhebt.

Weiterhin ist es mit der Schmelzschicht 9 des Profilelements 7 erstmals möglich, an ihren Schmalseiten bekantete, erfindungsgemäße Bauelemente 1, insbesondere Plattenelemente, zur Verfügung zu stellen, die in den Prüfungen zur Feuchte- und Klimabeständigkeit gemäß den Anforderungen des AMK-Merkblattes AMK-MB-005 Ausgabedatum 07/2007 geprüft, zu optimalen Ergebnissen führen, d.h., dass die Bauelemente 1, insbesondere Plattenelement, nach der absolvierten Prüfung nahezu keinerlei Schädigungen aufweisen wie Rissbildungen, Fugenbildungen, Ablösungen oder Veränderungen.

Bei dem erfindungsgemäßen Bauelement 1, insbesondere Plattenelement, ist bei der Bestimmung des Brennverhaltens durch den Sauerstoffindex gemäß EN ISO 4589-2, OI gemäß dem Anforderungssatz R 24 ebenfalls ein Sauerstoffgehalt von größer 32 % ermittelt worden, sodass auch für diesen Anforderungssatz R24 eine Klassifikation in HL3 erreicht ist.

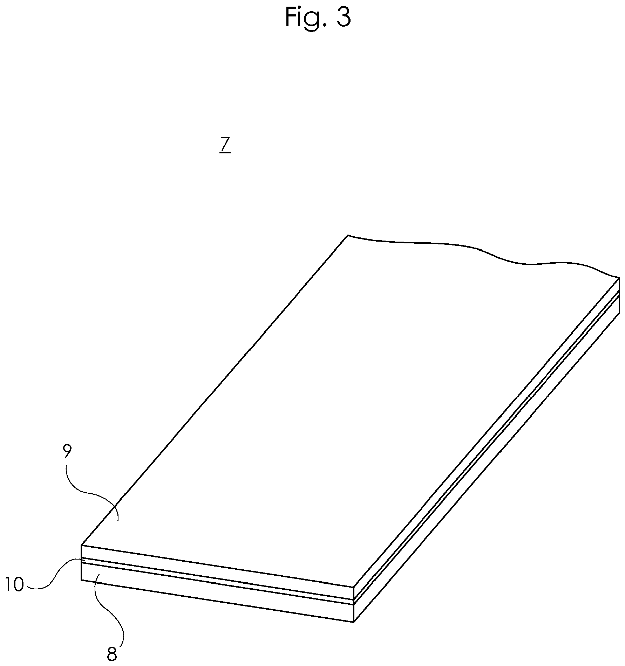

In der Figur 3 ist ein Profilelement 7 des erfindungsgemäßen Bauelements 1, insbesondere Plattenelement, dargestellt.

Das Profilelement 7 weist eine Strukturschicht 8 sowie eine Schmelzschicht 9 auf, die über eine Funktionsschicht 10 voneinander beabstandet angeordnet sind.

Der Werkstoff der Funktionsschicht 10 ist dabei ausgewählt aus der Gruppe der Polyurethane (PUR), der Acrylate, der Chloroprene, der Epoxidharze, der Ethylenvinylacetate (beispielsweise EVA-Dispersionen), der Polyvinylacetate (PVAC-Dispersionen) und dergleichen, sowie Mischungen aus zwei oder mehreren der vorgenannten Stoffe, in diesem Ausführungsbeispiel ist es ein Polyurethan (PUR).

Der Werkstoff der Strukturschicht 8 des Profilelements 7 kann ausgewählt sein aus beliebigen Werkstoffen, beispielsweise aus polymeren Werkstoffen wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder AcrylnitrilButadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyurethan (PUR); Polycarbonat (PC) sowie Mischungen aus wenigstens zwei diesen Materialien, insbesondere PC/ABS, basiert. Dabei können dem polymeren Werkstoff der Strukturschicht 8 des Profilelementes 7 geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 2 bis 50 Gew.-%, vorzugsweise 5 bis 35 Gew.-%, bezogen auf die Gesamtmasse, enthalten.

In diesem Ausführungsbeispiel ist der Werkstoff der Strukturschicht 8 eine Mischung aus ABS und PC, mit einer Komponente ausgewählt aus einem anorganischen Flammschutzmittel in einer Menge von etwa 0,4 Gewichts-Prozent, bezogen auf das Gesamtgewicht.

Der Werkstoff der Strukturschicht 8 des Profilelements 7 weist in diesem Ausführungsbeispiel ein Brandverhalten nach UL-Norm 94 von V1 bei einer Dicke von 1,0 mm auf. Weiterhin weist der Werkstoff der Strukturschicht 8 des Profilelements 7 einen Flammindex von 950 °C bei einer Dicke von 3 mm gemäß IEC60695-2-12 auf.

Der Werkstoff des Profilelements 7 ist in diesem Ausführungsbeispiel so ausgebildet, dass er einen relativen Temperaturindex nach UL-Norm 746B von etwa 92 °C aufweist.

Der Werkstoff des Profilelements 7 ist vorteilhafterweise auch so ausgebildet, dass er einen CTI nach UL-Norm 746A von etwa 500 °C aufweist.

## Patentansprüche

1. Bauelement (1), insbesondere Plattenelement, umfassend wenigstens ein Trägerelement (2) mit wenigstens einer Decklage (3, 4), wenigstens einem Profilelement (7), umfassend wenigstens eine Strukturschicht (8), wobei das Profilelement (7) an wenigstens einer Schmalseite des Trägerelementes (2) fixiert ist, wobei die Strukturschicht (8) wenigstens teilweise einen polymeren Werkstoff aufweist, wobei wenigstens eine Decklage (3, 4) und der Werkstoff des Profilelements ( 7) wenigstens teilweise eine Komponente, ausgewählt aus einem halogenierten und/oder einem stickstoffbasierten und/oder einem organophosphorbasierten und/oder einem anorganischen Flammschutzmittel in einer Menge von 0,1 bis 30 Gewichts-%, vorzugsweise 0,2 bis 25 Gewichts-%, bezogen auf ihr Gesamtgewicht aufweisen, **dadurch gekennzeichnet, dass** der Werkstoff des Profilelements (7) ein Brandverhalten nach UL- Norm 94 von wenigstens V1 bei einer Dicke von 1,0 mm aufweist, dass der Werkstoff des Profilelements (7) einen Flammindex von 960 °C bei einer Dicke von 3 mm gemäß IEC60695-2-12 aufweist.

2. Bauelement (1) nach Anspruch 1, **dadurch gekennzeichnet, dass** der Werkstoff des Profilelements (7) einen relativen Temperaturindex nach UL-Norm 746B von wenigstens 90 °C aufweist.

3. Bauelement (1) nach einem der vorhergehenden Ansprüche, **dadurch gekennzeichnet, dass** der Werkstoff des Profilelements (7) einen CTI (Comparative Tracking Index) nach UL-Norm 746A von wenigstens 500 °C, bevorzugt wenigstens 550 °C aufweist.

4. Bauelement (1) nach einem der vorhergehenden Ansprüche, **dadurch gekennzeichnet, dass** der Werkstoff des Profilelements (7) eine Kerbschlagzähigkeit von wenigstens 20 kJ/m ² bei 23 °C gemäß ISO 180/1, bevorzugt wenigstens 10 kJ/m ² bei -30 °C gemäß ISO 180/1A aufweist.

5. Bauelement (1) nach einem der vorhergehenden Ansprüche, **dadurch gekennzeichnet, dass** das Profilelement (7) wenigstens eine Schmelzschicht (9) aufweist, die über wenigstens eine Funktionsschicht (10) von der Strukturschicht (8) beabstandet, angeordnet ist.

6. Bauelement (1) nach Anspruch 5, **dadurch gekennzeichnet, dass** die, der Funktionsschicht (10) gegenüberliegend angeordnete, Seite der Strukturschicht (8) des Profilelements (7) einer Oberflächenbehandlung durch ein Corona-Verfahren, ein Beflammungs- Verfahren, ein Plasma-Verfahren, ein Silikatisierungs-Verfahren und ein Silanisierungsverfahren, unterworfen ist.

7. Bauelement (1) nach einem der Ansprüche 5 und 6, **dadurch gekennzeichnet, dass** die Schmelzschicht (9) des Profilelements (7) mittels Laserstrahlung, Plasmastrahlung, Mikrowellenstrahlung, Infrarotstrahlung und Heißlufl aufschmelzbar ist.

8. Bauelement (1) nach einem der Ansprüche 5-7, **dadurch gekennzeichnet, dass** der Werkstoff der Strukturschicht (8) und/oder der Werkstoff der Schmelzschicht (9) des Profilelements (7) licht- und/oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält.

9. Bauelement (1) nach einem der Ansprüche 5-8, **dadurch gekennzeichnet, dass** der Werkstoff der Strukturschicht (8) und/oder der Werkstoff der Schmelzschicht (9) des Profilelements (7) wenigstens einen, teilweise anorganische und/oder organische Pigmente enthaltenden, Zusatzstoff in einer Menge von etwa 0,01 bis 5 Gew.-%, bevorzugt 0,02 bis 3,0 Gew.-%, bezogen auf die Gesamtmenge, eingelagert enthält.

10. Bauelement ( (1) nach einem der Ansprüche 5-9, **dadurch gekennzeichnet, dass** der Werkstoff der Strukturschicht (8) und/oder der Schmelzschicht (9) wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher.

## Claims

1. Component (1), in particular a panel element, comprising at least one substrate element (2) having at least one covering sheet (3, 4), at least one profile element (7), comprising at least one structuring layer (8), the profile element (7) being secured on at least one narrow side of the substrate element (2), the structuring layer (8) having a polymer material at least in part, at least one covering sheet (3, 4) and the material of the profile element (7) having, at least in part, a component selected from a halogenated and/or a nitrogen-based and/or an organophosphate-based and/or an inorganic flame retardant in an amount from 0.1 to 30 wt.%, preferably from 0.2 to 25 wt.%, in relation to the total weight thereof, **characterised in that** the material of the profile element (7) has a fire performance as per the UL 94 standard of at least V1 at a thickness of 1.0 mm, **in that** the material of the profile element (7) has a flammability index of 960°C at a thickness of 3 mm in accordance with IEC60695-2-12.

2. Component (1) according to claim 1, **characterised in that** the material of the profile element (7) has a relative temperature index as per the UL 746B standard of at least 90°C.

3. Component (1) according to any of the preceding claims, **characterised in that** the material of the profile element (7) has a CTI (comparative tracking index) as per the UL 746A standard of at least 500°C, preferably at least 550°C.

4. Component (1) according to any of the preceding claims, **characterised in that** the material of the profile element (7) has a notched bar impact strength of at least 20 kJ/m² at 23°C as per ISO 180/1, preferably at least 10 kJ/m² at -30°C as per ISO 180/1A.

5. Component (1) according to any of the preceding claims, **characterised in that** the profile element (7) has at least one melt layer (9) that is arranged over at least one functional layer (10) in a manner spaced apart from the structuring layer (8).

6. Component (1) according to claim 5, **characterised in that** the side, arranged opposite the functional layer (10), of the structuring layer (8) of the profile element (7) undergoes a surface treatment by means of a corona process, a flame-treatment process, a plasma process, a silication process and a silanisation process.

7. Component (1) according to any of claims 5 and 6, **characterised in that** the melt layer (9) of the profile element (7) can be melted by means of laser radiation, plasma radiation, microwave radiation, infrared radiation and hot air.

8. Component (1) according to any of claims 5 to 7, **characterised in that** the material of the structuring layer (8) and/or the material of the melt layer (9) of the profile element (7) contain(s), in embedded form, light- and/or radiation-absorbing additives in an amount from 0.01 to 5 wt.%, preferably from 0.02 to 3.0 wt.%, in relation to the total amount.

9. Component (1) according to any of claims 5 to 8, **characterised in that** the material of the structuring layer (8) and/or the material of the melt layer (9) of the profile element (7) contain(s), in embedded form, at least one additive, which in part contains inorganic and/or organic pigments, in an amount from approximately 0.01 to 5 wt.%, preferably from 0.02 to 3.0 wt.%, in relation to the total amount.

10. Component (1) according to any of claims 5 to 9, **characterised in that** the material of the structuring layer (8) and/or of the melt layer (9) contains at least one of the following additives: stabilisers for improving the resistance to the effects of light, UV radiation and the weather; stabilisers for improving thermal and thermo-oxidative resistance; stabilisers for improving hydrolytic resistance, stabilisers for improving acidolytic resistance, lubricants, demoulding aids, chromophoric additives, crystallisation-regulating substances and nucleation agents, flame retardants, impact resistance modifiers, fillers and/or plasticisers.

## Revendications

1. Élément de construction (1), en particulier élément de panneau, comportant au moins un élément de support (2) comprenant au moins une couche de recouvrement (3, 4), au moins un élément profilé (7), comportant au moins une couche structurale (8), l'élément profilé (7) étant fixé sur au moins un petit côté de l'élément de support (2), la couche structurale (8) présentant au moins partiellement un matériau polymère, au moins une couche de recouvrement (3, 4), et le matériau de l'élément profilé (7) présentant au moins partiellement un composant choisi parmi un agent ignifuge halogéné et/ou à base d'azote et/ou à base d'organophosphore et/ou inorganique en une quantité de 0,1 à 30 % en poids, de préférence de 0,2 à 25 % en poids, par rapport à son poids total,
**caractérisé en ce que** le matériau de l'élément profilé (7) présente un comportement au feu selon la norme UL 94 d'au moins V1 à une épaisseur de 1,0 mm, **en ce que** le matériau de l'élément profilé (7) présente un indice de flamme de 960 °C à une épaisseur de 3 mm selon IEC60695-2-12.

2. Élément de construction (1) selon la revendication 1, **caractérisé en ce que** le matériau de l'élément profilé (7) présente un indice thermique relatif selon la norme UL 746B d'au moins 90 °C.

3. Élément de construction (1) selon l'une quelconque des revendications précédentes, **caractérisé en ce que** le matériau de l'élément profilé (7) présente un CTI (Comparative Tracking Index) selon la norme UL 746A d'au moins 500 °C, de préférence d'au moins 550 °C.

4. Élément de construction (1) selon l'une quelconque des revendications précédentes, **caractérisé en ce que** le matériau de l'élément profilé (7) présente une résistance aux chocs Izod d'au moins 20 kJ/m² à 23 °C selon ISO 180/1, de préférence d'au moins 10 kJ/m² à - 30 °C selon ISO 180/1A.

5. Élément de construction (1) selon l'une quelconque des revendications précédentes, **caractérisé en ce que** l'élément profilé (7) présente au moins une couche de fusion (9), qui est agencée à distance de la couche structurale (8) par l'intermédiaire d'au moins une couche fonctionnelle (10).

6. Élément de construction (1) selon la revendication 5, **caractérisé en ce que** le côté de la couche structurale (8) de l'élément profilé (7) qui est agencé à l'opposé de la couche fonctionnelle (10) est soumis à un traitement de surface par un procédé Corona, un procédé à la flamme, un procédé au plasma, un procédé de silicatisation et un procédé de silanisation.

7. Élément de construction (1) selon l'une quelconque des revendications 5 et 6, **caractérisé en ce que** la couche de fusion (9) de l'élément profilé (7) peut être fondue au moyen d'un rayonnement laser, d'un rayonnement plasma, d'un rayonnement micro-ondes, d'un rayonnement infrarouge et d'air chaud.

8. Élément de construction (1) selon l'une quelconque des revendications 5 à 7, **caractérisé en ce que** le matériau de la couche structurale (8) et/ou le matériau de la couche de fusion (9) de l'élément profilé (7) contiennent des additifs absorbant la lumière et/ou le rayonnement en une quantité de 0,01 à 5 % en poids, de préférence 0,02 à 3,0 % en poids, par rapport à la quantité totale.

9. Élément de construction (1) selon l'une quelconque des revendications 5 à 8, **caractérisé en ce que** le matériau de la couche structurale (8) et/ou le matériau de la couche de fusion (9) de l'élément profilé (7) contiennent au moins un additif contenant des pigments partiellement inorganiques et/ou organiques en une quantité d'environ 0,01 à 5 % en poids, de préférence 0,02 à 3,0 % en poids, par rapport à la quantité totale.

10. Élément de construction (1) selon l'une quelconque des revendications 5 à 9, **caractérisé en ce que** le matériau de la couche structurale (8) et/ou de la couche de fusion (9) contient au moins un des additifs suivants : des stabilisateurs pour améliorer la résistance à l'action de la lumière, au rayonnement UV et aux intempéries ; des stabilisateurs pour améliorer la résistance thermique et thermo-oxydative ; des stabilisateurs pour améliorer la résistance hydrolytique, des stabilisateurs pour améliorer la résistance acidolytique, des lubrifiants, des adjuvants de démoulage, des additifs colorants, des substances régulant la cristallisation et des agents de nucléation, des agents ignifuges, des modificateurs de résistance aux chocs, des charges et/ou des plastifiants.
